(19) **Europäisches Patentamt / European Patent Office / Office européen des brevets**

(11) **EP 2 633 506 B1**

(12) **FASCICULE DE BREVET EUROPEEN**

(45) Date de publication et mention de la délivrance du brevet:
**25.03.2015 Bulletin 2015/13**

(51) Int Cl.:
***G08C 17/02*** *(2006.01)*   ***H04L 29/06*** *(2006.01)*

(21) Numéro de dépôt: **11773293.3**

(22) Date de dépôt: **25.10.2011**

(86) Numéro de dépôt international:
**PCT/EP2011/068635**

(87) Numéro de publication internationale:
**WO 2012/055858 (03.05.2012 Gazette 2012/18)**

(54) **PROCEDE DE FONCTIONNEMENT D'UNE UNITE MOBILE DE COMMANDE D'UNE INSTALLATION DOMOTIQUE**

VERFAHREN FÜR DEN BETRIEB EINER MOBILEN STEUEREINHEIT EINER DOMOTIKANLAGE

METHOD OF OPERATING A MOBILE CONTROL UNIT OF A HOME-AUTOMATION INSTALLATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.10.2010 FR 1058766**

(43) Date de publication de la demande:
**04.09.2013 Bulletin 2013/36**

(73) Titulaire: **Somfy SAS**
**74300 Cluses (FR)**

(72) Inventeurs:
• **ORSAT, Jean-Michel**
**F-74300 Châtillon-sur-Cluses (FR)**

• **PELLARIN, Florent**
**F-74370 Pringy (FR)**

(74) Mandataire: **Novaimo**
**Bâtiment Europa 2**
**310 avenue Marie Curie**
**Archamps Technopole**
**74166 Saint Julien en Genevois Cedex (FR)**

(56) Documents cités:
**WO-A1-2005/048530   WO-A1-2009/017984**
**FR-A1- 2 898 719**

**Description**

L'invention concerne le domaine de la commande d'équipements domotiques dans plusieurs bâtiments comprenant au moins des équipements de fermeture ou de protection solaire motorisés, de chauffage et climatisation, d'éclairage, de gestion de piscine individuelle.

Ces équipements domotiques communiquent entre eux à l'aide d'un réseau domotique de type radiofréquences ou par courants porteurs, et peuvent communiquer avec des serveurs distants.

L'invention vise à simplifier la commande de ces équipements domotiques, en particulier lorsqu'un utilisateur souhaite utiliser une même télécommande dans le cadre de sa résidence principale et dans le cadre de sa résidence secondaire, ou encore lorsque cet utilisateur souhaite transmettre des droits d'accès à un de ses voisins sans pour autant être obligé de lui fournir une télécommande. L'invention permet également d'utiliser une télécommande de résidence principale pour accéder à un local partagé, par exemple une chambre d'hôtel, et/ou pour commander les équipements de ce local partagé.

La demande de brevet WO 03/088486 décrit un procédé d'évaluation de champ proche permettant de s'assurer, lors de la transmission d'une commande d'appairage, qu'un émetteur de cette commande est situé à proximité immédiate d'un récepteur.

Le brevet US 7,724,687 prévoit qu'une donnée confidentielle telle une « clé-maison » ne peut être transmise d'un émetteur d'ordres vers un autre émetteur d'ordres que si un récepteur d'ordres valide préalablement cette transmission. La demande de brevet WO 03/081352 décrit un procédé de changement de clé commune tandis que le brevet US 7,683,754 décrit un procédé de sélection d'un groupe pour la transmission d'une clé commune, par exemple en utilisant la tension d'alimentation des seuls éléments du groupe.

La demande de brevet EP 1 967 923 décrit un système et un procédé aptes à fournir à un utilisateur un environnement correspondant à un profil de préférences, cet environnement étant modifié par la détection de présence de l'utilisateur, par exemple au moyen d'une étiquette électronique.

Dans la demande de brevet EP 1 482 718, le transmetteur destiné à établir la communication avec l'élément à commander est raccordé au téléphone mobile par la prise jack d'écouteur ou par couplage et utilise une modulation DTMF ou analogue pour transmettre les signaux codés depuis le téléphone mobile vers le transmetteur.

Le brevet EP 0 913 979 décrit également l'adjonction à un téléphone mobile d'un émetteur supplémentaire pour la commande à distance d'un objet. Un mode spécifique permet la commande à distance sans utilisation de la radiocommunication mobile et le code d'abonné SIM de la carte est utilisé comme moyen d'authentification de l'utilisateur. La structure cellulaire du réseau de communication mobile est utilisée comme possibilité de contrôle de l'authentification.

La demande de brevet US 2002/0031228 décrit un téléphone mobile apte à communiquer à la fois avec un réseau public de communication de type GSM et, à faible distance, avec des dispositifs Bluetooth, par exemple des serrures de chambres d'hôtel ou de véhicule de location. Une connexion entre le téléphone mobile et un serveur distant est assurée via le réseau GSM. Le serveur distant transmet la clé d'authentification Bluetooth au téléphone mobile, sous forme cryptée et décryptable par le téléphone mobile. La clé d'authentification Bluetooth est ensuite transmise par le téléphone mobile au dispositif Bluetooth au moyen du transmetteur Bluetooth. Le code personnel d'identification PIN de l'utilisateur peut être utilisé pour sécuriser la transmission.

La demande WO 00/57375 décrit un système de sécurité antivol pour équipements électriques domestiques. Chaque fois que l'équipement est mis sous tension, il ne fonctionne qu'à la réception d'un code de libération, transmis par un contrôleur de maison à travers l'alimentation électrique ou un réseau local. Tout équipement déplacé de sa position autorisée, c'est-à-dire ne recevant pas son code de libération de la part du contrôleur de maison, cesse de fonctionner. Il est prévu que le contrôleur de maison peut lui-même être volé en même temps que l'équipement électrique domestique. Pour pallier cet inconvénient, le contrôleur de maison comprend un moyen de localisation par exemple par l'intermédiaire d'un réseau cellulaire ou par GPS et il peut transmettre sa position à un centre opérationnel distant, en utilisant par exemple le réseau internet ou GSM. Le contrôleur de maison n'a pas d'autre fonction dans une installation que d'assurer le blocage ou le déblocage des équipements en cas de déconnexion et reconnexion de ceux-ci sur le réseau électrique.

La demande de brevet FR 2 924 890 décrit un procédé de sélection automatique d'un périphérique tel un équipement domotique utilisant un critère de proximité: un message est diffusé vers tous les périphériques et chacun d'eux répond. En fonction du niveau de signal reçu, on repère automatiquement le périphérique le plus proche pour lui envoyer une commande.

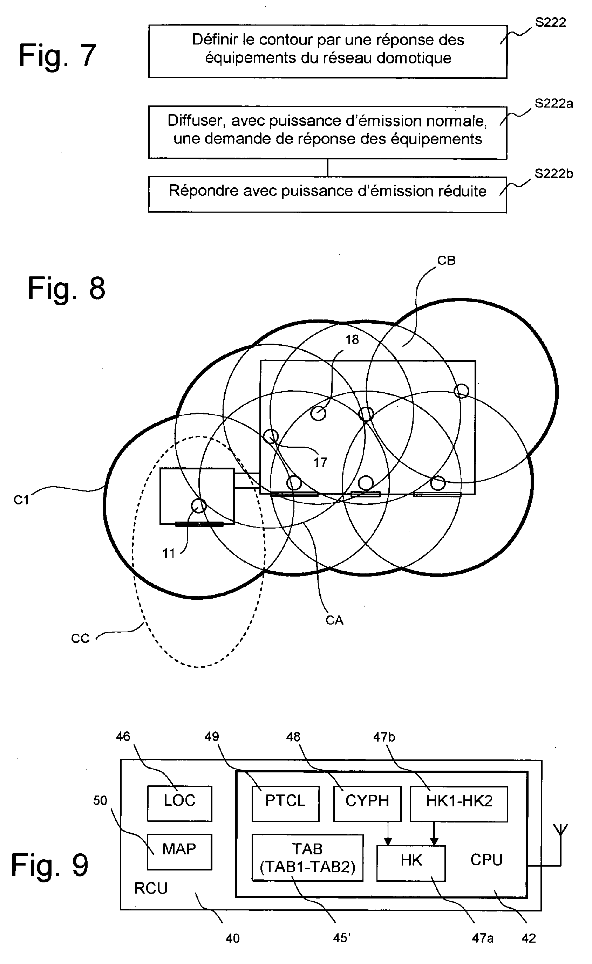

Le brevet US 7,289,014 décrit un système de commande de barrière d'accès tel que portail ou porte de garage, notamment en fonction de la localisation et/ou de la direction de mouvement d'un véhicule au voisinage de la barrière d'accès. Il est prévu (figure 9) que des localisations particulières d'un transpondeur ou « dispositif de proximité » puissent être apprises à l'aide d'un système de localisation satellite GPS, de manière à ce que le système de commande provoque une action prédéterminée quand le « dispositif de proximité » retrouve une telle localisation, après apprentissage. Par exemple, si le dispositif de proximité est dans une localisation dite d'action, alors une action sur un bouton provoque une commande d'ouverture, ce qui n'est pas le cas en dehors de cette localisation d'action.

La demande de brevet WO 01/71685 décrit une télécommande universelle et des procédés aptes à afficher sur l'écran de la télécommande des icônes relatives aux équipements à portée radio de la télécommande, et/ou des interfaces de commande de ces équipements.

Le brevet US 6,563,430 décrit un dispositif de commande à distance dont l'interface utilisateur de commande dépend de la localisation du dispositif de commande, à l'intérieur d'une maison par exemple. De nombreuses méthodes de localisation sont décrites.

Un tel dispositif est aussi décrit dans la demande de brevet FR 2 898 719.

Le brevet US 7,363,028 décrit également ce type de dispositif de commande et notamment une méthode d'identification radiofréquences de l'équipement le plus proche du dispositif de commande, par décroissance progressive de la puissance d'émission. Ce dispositif est utilisé pour la commande de différents équipements HiFi dans une pièce.

Le brevet US 7,110,761 décrit l'usage d'un dispositif de pointage directionnel pour établir une connexion sans fil entre le dispositif de pointage et un autre dispositif, ciblé par le dispositif de pointage directionnel.

Dans ces trois derniers documents, il n'est pas fait référence à une clé commune, partagée entre les équipements à piloter et une télécommande et permettant notamment de sécuriser une fonction d'accès dans le bâtiment.

Le but de l'invention est de fournir un procédé de fonctionnement d'une unité mobile de commande remédiant aux inconvénients évoqués précédemment et améliorant les procédés connus de l'art antérieur. En particulier, l'invention propose un procédé de fonctionnement sécurisé dans lequel il est possible de commander de manière simple et conviviale grâce à une unité mobile de commande, tel un téléphone portable ou une simple télécommande porte-clés, différents équipements de plusieurs installations domotiques distinctes, et en particulier des équipements d'accès de ces installations domotiques distinctes.

Selon l'invention, le procédé régit le fonctionnement d'une unité mobile de commande destinée à faire successivement et alternativement partie :

- d'une première installation domotique comprenant des équipements communiquant sur un premier réseau domotique, chaque élément de la première installation étant muni d'un identifiant et partageant une même première clé commune propre au premier réseau domotique et authentifiant l'appartenance d'un équipement au premier réseau domotique, et
- d'une deuxième installation domotique comprenant des équipements communiquant sur un deuxième réseau domotique, chaque élément de la deuxième installation étant muni d'un identifiant et partageant une même deuxième clé commune propre au deuxième réseau domotique et authentifiant l'appartenance d'un équipement au deuxième réseau domotique,

l'unité mobile de commande comprenant une mémoire contenant plusieurs clés communes dont les première et deuxième clés communes, caractérisé en ce qu'il comprend :

- une étape de localisation de l'unité mobile de commande relativement à la première installation domotique et/ou relativement à la deuxième installation domotique,
- une étape de sélection automatique d'une clé commune dans l'unité mobile de commande, selon le résultat de l'étape de localisation.

Au moins un des équipements de la première installation peut être un équipement motorisé de fermeture et/ou au moins un des équipements de la deuxième installation peut être un équipement motorisé de fermeture.

L'étape de localisation peut comprendre la comparaison de données de géolocalisation de l'unité mobile de commande avec un contour enregistré dans une mémoire cartographique.

L'étape de localisation peut comprendre la réception par l'unité mobile de commande d'une réponse d'au moins un des équipements domotiques à un message envoyé par l'unité mobile de commande.

Le procédé de fonctionnement peut comprendre une étape d'émission d'un premier message, comprenant une demande de réponse, par l'unité mobile de commande et une étape d'émission d'un deuxième message par chaque équipement ayant reçu le premier message.

Une des étapes d'émission peut être réalisée à puissance réduite.

Le procédé de fonctionnement peut comprendre une étape d'émission d'un troisième message comprenant un ordre de commande et la première clé commune et une étape d'émission d'un quatrième message comprenant le même ordre de commande avec la deuxième clé commune quand le troisième message n'a donné lieu à aucune réponse captée par l'unité mobile de commande.

L'étape de localisation et/ou l'étape de sélection automatique peut être désactivée dès lors qu'une clé commune a été sélectionnée.

L'étape de localisation et/ou l'étape de sélection automatique est réactivée dès lors qu'un ordre émis ne donne pas lieu à réponse d'un équipement domotique.

Le procédé de fonctionnement peut comprendre une étape de transmission sécurisée des première et deuxième clés communes et d'enregistrement de ces clés communes dans l'unité mobile de commande.

Le procédé de fonctionnement peut comprendre une étape de téléchargement dans l'unité mobile de commande d'une table des identifiants d'équipements domotiques aptes à être commandés par l'unité mobile de commande.

L'étape de transmission sécurisée ou l'étape de téléchargement peut être effectuée à partir de données situées dans un serveur distant.

L'étape de localisation de l'unité mobile de commande peut comprendre la localisation de l'unité mobile de commande relativement à une première zone géographique contenant les éléments de la première installation domotique et/ou la localisation de l'unité mobile de commande relativement à une deuxième zone géographique contenant les éléments de la deuxième installation domotique.

Selon l'invention, une unité mobile de commande comprend des moyens matériels et/ou logiciels de mise en oeuvre du procédé de fonctionnement défini précédemment.

Selon l'invention, une installation comprend une unité mobile de commande définie précédemment.

L'invention porte aussi sur un programme informatique comprenant un moyen de code de programme informatique adapté à la réalisation des étapes du procédé défini précédemment, lorsque le programme est exécuté sur un ordinateur.

L'invention sera mieux comprise à la lecture de la description qui va suivre, donnée uniquement à titre d'exemple et faite en se référant aux dessins annexés sur lesquels :

La figure 1 représente sous forme de schéma fonctionnel deux installations domotiques et une unité mobile de commande selon l'invention.

La figure 2 représente des étapes préliminaires des différents modes d'exécution du procédé de fonctionnement selon l'invention.

La figure 3 représente des étapes principales d'un premier mode d'exécution d'un procédé de fonctionnement selon l'invention.

La figure 4 représente une étape complémentaire d'un deuxième mode d'exécution d'un procédé de fonctionnement.

La figure 5 représente une sous-étape d'un troisième mode d'exécution d'un procédé de fonctionnement.

La figure 6 représente un premier mode de réalisation d'une étape du premier mode d'exécution d'un procédé de fonctionnement.

La figure 7 représente un deuxième mode de réalisation d'une étape du premier mode d'exécution d'un procédé de fonctionnement.

La figure 8 représente une zone géographique utilisée dans le deuxième mode de réalisation de l'étape représenté à la figure 7.

La figure 9 représente partiellement l'unité mobile de commande pour illustrer des détails de réalisation.

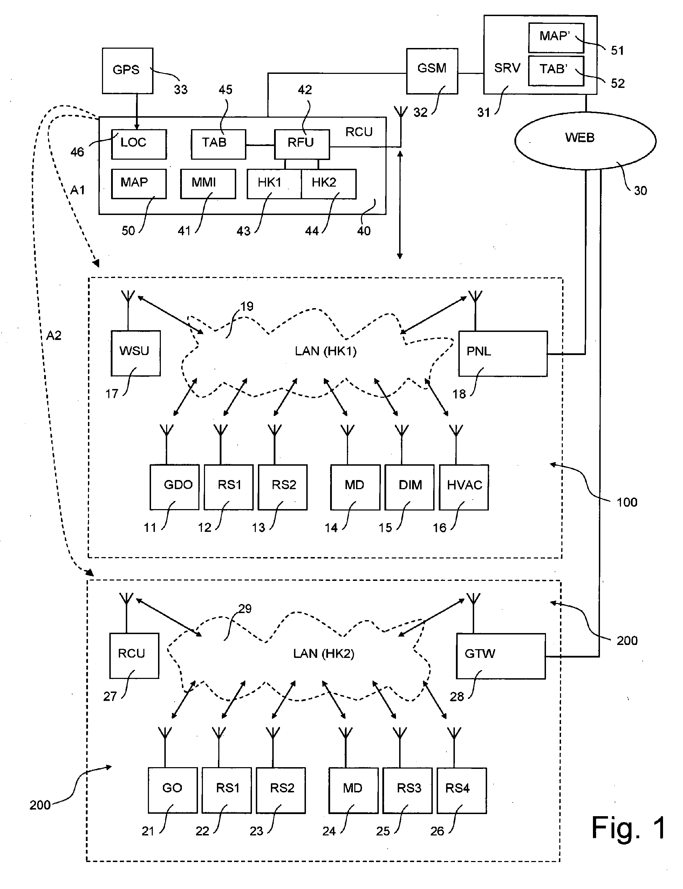

La figure 1 représente sous forme de schéma fonctionnel une première installation domotique 100, une deuxième installation domotique 200 et une unité mobile de commande 40 selon l'invention. La figure représente également les liaisons des installations domotiques et de l'unité mobile de commande avec l'environnement.

Les installations domotiques comprennent des équipements. Certains équipements sont de type actionneur et comprennent en particulier un ou plusieurs actionneurs électriques D'autres équipements sont de type capteur ou de type boîtier de commande. Ainsi, dans l'exemple de la figure 1, la première installation comprend:

- un premier équipement 11 de type actionneur pour porte de garage,
- un deuxième équipement 12 de type actionneur pour volet roulant,
- un troisième équipement 13 également de type actionneur pour volet roulant,
- un quatrième équipement 14 de type actionneur pour serrure électrique pour porte principale,
- un cinquième équipement 15 de type actionneur gradateur (« dimmer ») pour dispositif d'éclairage à intensité variable.
- un sixième équipement 16 de type actionneur de chauffage-climatisation,
- un septième équipement 17 de type boîtier de commande et capteur, sous forme d'un interrupteur mural,
- un huitième équipement 18 de type boîtier de commande et capteur incluant un écran d'affichage, une interface de commande tactile et incluant par exemple une sonde de température.

Bien entendu, l'installation domotique peut comprendre un nombre beaucoup plus élevé de boîtiers de commande et/ou de capteurs et peut comprendre d'autres équipements en plus ou remplacement des équipements énumérés précédemment, notamment des équipements de type actionneur de store de terrasse, de traitement de l'eau, de ventilation, etc., y compris de type domestique comme une machine à laver, un téléviseur etc. L'invention s'applique cependant préférentiellement à des équipements occupant une place fixe dans le bâtiment et au moins un des équipements étant de type accès, c'est-à-dire apte à empêcher une intrusion, ce qui est ici le cas des quatre premiers équipements.

Tous les équipements communiquent entre eux sur un même premier réseau domotique 19, de type local (LAN) et utilisant un protocole commun, par exemple io-homecontrol, EIB, Zigbee etc. (marques déposées). Préférentiellement, le réseau domotique est de type radiofréquences, ce qui est représenté par des flèches bidirectionnelles et un symbole d'antenne sur chaque équipement. Alternativement, plusieurs réseaux locaux de protocole et/ou de media différents sont utilisés pour former le premier réseau domotique 19. Les équipements comprennent donc chacun un moyen de liaison permettant la communication dans le réseau domotique 19.

Tous les équipements partagent une première clé commune HK1, dite clé maison. Cette clé est par exemple un mot de 64 ou 128 bits, logé dans une mémoire de chaque équipement et un algorithme d'authentification utilisant la clé commune est utilisé pour permettre à un équipement de reconnaître qu'un ordre de commande ou un message quelconque est bien issu d'un autre équipement de l'installation.

Par la suite, on dira pour simplifier qu'un message « contient la clé commune » ou « comprend la clé commune » quand son émetteur est authentifié par la clé commune. En pratique, cette authentification est réalisée par un dialogue entre l'émetteur du message et son destinataire, ou est réalisée par un cryptage du contenu du message à l'aide de la clé commune, ou encore nécessite à la fois un dialogue et un cryptage du contenu du message. La clé commune n'est donc pas contenue, en tant que telle, dans les messages.

Préférentiellement, l'installation est raccordée à un serveur distant. Ainsi, le huitième équipement 18 peut être connecté à un réseau partagé 30 de type internet par une passerelle, non représentée. Un serveur distant 31 peut aussi être connecté au réseau partagé, rendant ainsi possible une communication entre le huitième équipement et le serveur distant, ou la communication entre tout équipement et le serveur distant, en utilisant successivement le réseau local et le réseau partagé.

De la même façon, une deuxième installation domotique 200 comprend plusieurs équipements domotiques référencés 21-26, ceux-ci étant ici de type accès et constitués respectivement par un portail motorisé 21, deux volets roulants 22-23, une serrure de porte principale 24 et deux autres volets roulants 25-26.

Ces équipements domotiques communiquent sur un deuxième réseau domotique 29, utilisant le même protocole que le premier réseau domotique. Une deuxième clé commune HK2 est partagée par tous les équipements du deuxième réseau domotique. La deuxième installation domotique comprend également une unité de commande à distance 27 de type nomade, apte à communiquer sur le deuxième réseau domotique, et une passerelle 28 de communication entre le deuxième réseau domotique et le réseau partagé 30.

La première installation domotique correspond par exemple à la résidence principale de l'utilisateur, tandis que la deuxième installation domotique correspond par exemple à sa résidence secondaire.

Alternativement, la deuxième installation domotique correspond par exemple à la résidence principale d'un voisin.

Alternativement, la deuxième installation domotique est une chambre d'hôtel.

Une unité mobile de commande 40 comprend un moyen de liaison réseau au premier réseau domotique 19 et au deuxième réseau domotique 29, ce moyen de liaison réseau étant également représenté par le symbole d'une antenne et une double flèche.

Ainsi, la même unité mobile de commande peut participer à la commande de la première installation, comme représenté par la flèche A1, ou à la commande de la deuxième installation, comme représenté par la flèche A2.

L'unité mobile de commande comprend une interface de commande 41, par exemple un clavier de deux ou quatre touches quand l'unité mobile de commande présente des dimensions réduites pour servir de porteclés et/ou être facilement insérée dans une poche ou un sac à main.

Alternativement, l'interface de commande comprend un clavier plus important et des moyens d'affichage, ou encore un écran tactile.

L'unité mobile de commande comprend une unité de communication domotique 42 apte à émettre des messages transmis sur le réseau domotique sous forme de signaux radiofréquences par le moyen de liaison. Ces messages comprennent les ordres de commande résultant d'une action sur l'interface homme machine ainsi que la clé commune de la première installation ou de la deuxième installation. L'unité de communication domotique est raccordée à une mémoire de première clé commune 43 et à une mémoire de deuxième clé commune 44. L'unité de communication domotique est également raccordée à une table 45 incluant les identifiants des équipements aptes à être commandés par l'unité mobile de commande.

Ces éléments peuvent être réunis dans un même microcontrôleur.

L'unité mobile de commande comprend un moyen de localisation 46. Le moyen de localisation 41 utilise préférentiellement une ressource externe 33, par exemple des satellites de géolocalisation de type GPS ou Galiléo.

Le moyen de localisation peut également comprendre un accéléromètre, notamment un accéléromètre 3D, pour établir une partie d'une information de localisation. Avantageusement, un même accéléromètre 3D est utilisé dans le moyen de localisation, pour des mesures de déplacement par rapport à un point de référence et dans le moyen de mesure d'orientation pour des mesures d'orientation de l'unité mobile de commande.

L'unité mobile de commande est par ailleurs reliée au serveur 31 par un réseau de communication longue distance 32, de type GSM.

Un téléphone portable équipé des moyens matériels décrits ci-dessus et de moyens logiciels aptes à exécuter les procédés décrits par la suite peut avantageusement servir d'unité mobile de commande. Le moyen de liaison réseau au réseau domotique est par exemple logé dans la carte SIM du téléphone, ou dans la batterie du téléphone, ou il est lié au téléphone par une connexion amovible, comme une prise « jack » ou « dock » d'écouteur ou une prise de support (dite prise « dock »). L'unité de communication domotique est détaillée dans cette variante sous la référence 42 sur la figure 9 : elle comprend une mémoire de clé commune active 47a dans laquelle est enregistrée la clé commune active et une table des clés communes 47b, contenant les codes de toutes les clés communes enregistrées dans l'unité mobile de commande. Alternativement, la mémoire de clé commune active peut être constituée par un pointeur indiquant où se trouve la clé commune active dans la table des clés communes.

L'unité de communication domotique comprend également une clé de cryptage 48 et, en mémoire permanente 49, le protocole PTCL du réseau domotique.

Pour des raisons de sécurité, l'unité de contrôle est matériellement distincte du téléphone, auquel elle est associée pour former l'unité mobile de commande, et ne peut être fournie par exemple que par un fabricant d'un des équipements du réseau domotique. Ce caractère distinctif l'unité de contrôle apparaît sous la forme d'un trait gras.

L'unité de commande comprend des moyens matériels et/ou logiciels permettant de régir son fonctionnement conformément au procédé objet de l'invention. Les moyens logiciels peuvent notamment comprendre un moyen de code de programme informatique adapté à la réalisation des étapes du procédé selon l'invention, lorsque le programme tourne sur un ordinateur. Les moyens matériels comprennent un moyen de localisation permettant de localiser l'unité mobile de commande par rapport à une ou plusieurs zones géographiques, en particulier deux zones géographiques contenant respectivement les éléments de la première et de la deuxième installation domotique et un moyen de sélection automatique d'une clé commune contenue dans l'unité mobile de commande.

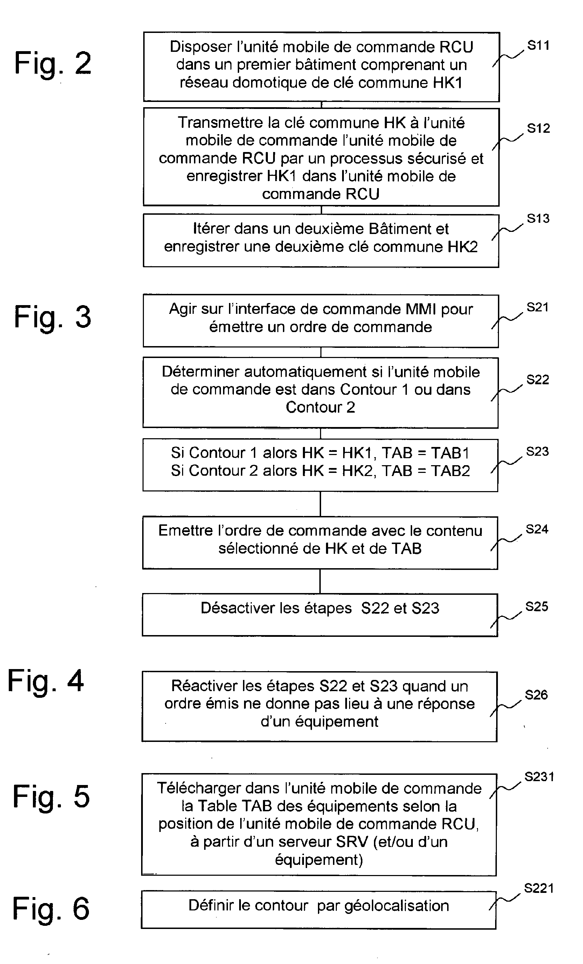

La figure 2 représente des étapes préliminaires des différents modes d'exécution du procédé de fonctionnement selon l'invention. Dans une première étape préliminaire S11, l'unité mobile de commande est disposée dans le bâtiment contenant la première installation domotique ou aux abords de ce bâtiment.

Suite à une manoeuvre particulière de l'utilisateur, une deuxième étape préliminaire S12 est activée, dans laquelle la première clé commune HK1 est transmise à l'unité mobile de commande.

Cette étape utilise un des procédés connus de l'art antérieur. Elle peut avoir été déléguée à un installateur de confiance.

Par exemple, la clé commune est contenue dans un document confidentiel, communiqué à l'installateur par le propriétaire de l'installation. Elle est alors reportée, sous forme de caractères alphanumériques, à l'aide d'un clavier de l'unité mobile de commande. Alternativement, elle est inscrite sous forme de code à barres sur le document confidentiel et elle est lue par un appareil photographique de l'unité mobile de commande. Alternativement, elle est enregistrée dans une étiquette électronique possédée par le propriétaire et transmise à l'installateur par ce dernier, l'unité mobile de commande étant apte à lire ladite étiquette électronique. Alternativement, elle est transmise via GSM par le serveur distant. Alternativement, elle est transmise, à puissance réduite, sur le réseau domotique par un équipement interne au bâtiment et sur lequel a été réalisée une manipulation particulière. Plusieurs de ces alternatives peuvent être combinées pour transmettre tout ou partie de la clé commune à l'unité mobile de commande.

Préférentiellement, la sécurisation du processus vient d'un cryptage et d'une procédure d'authentification : par exemple un code PIN connu du seul propriétaire, ou du seul installateur, permet de décrypter la clé commune.

La première clé commune est alors enregistrée dans une mémoire de l'unité mobile de commande, et préférentiellement dans un module séparé RFU de cette unité mobile de commande, décrit en relation avec la figure 9, le décryptage ayant lieu dans ce module séparé.

Dans une troisième étape préliminaire S13, on itère les étapes précédentes pour la deuxième installation et la deuxième clé commune.

A l'issue des étapes préliminaires, qui peuvent avoir lieu dans un ordre quelconque des installations et selon un calendrier quelconque, les deux clés communes sont enregistrées dans l'unité mobile de commande.

Ces étapes préliminaires peuvent être itérées pour une troisième installation ou un nombre d'installations plus important si le nombre de mémoires de clé commune a été prévu en conséquence.

Des sous-étapes préliminaires, non décrites, ont également permis d'enregistrer les identifiants des équipements aptes à être commandés par l'unité mobile de commande dans chaque installation.

La figure 3 représente des étapes principales d'un premier mode d'exécution du procédé de fonctionnement. Le procédé de fonctionnement peut être utilisé aussi bien dans un mode d'usage que dans un mode de configuration.

Ce procédé de fonctionnement est activé dès lors que plus d'une clé commune a été enregistrée dans l'unité mobile de commande. On suppose dans ce qui suit que l'unité mobile de commande, contenue par exemple dans un porte-clés, est utilisée par un propriétaire utilisateur d'une résidence principale (première installation) et d'une résidence secondaire (deuxième installation).

Dans une première étape principale S21, l'utilisateur agit sur l'interface de commande pour émettre un ordre de commande. Par exemple, il a quitté sa résidence principale et arrive au voisinage de sa résidence secondaire: il appuie alors sur le bouton de commande qu'il sait être affecté à l'actionneur de portail 21. Il y a alors passage à une deuxième étape principale S22, dite étape de localisation, dans laquelle l'unité mobile de commande est localisée. La localisation est effectuée en déterminant si l'unité mobile de commande se trouve dans une première zone géographique, couvrant la première installation, ou une deuxième zone, couvrant la deuxième installation. Chaque zone est définie par un contour. Un premier contour (Contour 1) correspond donc à une première zone géographique dans laquelle se trouve la première installation et un deuxième contour (Contour 2) correspond à une deuxième zone géographique dans laquelle se trouve la deuxième installation.

La localisation de l'unité mobile de commande dans une zone ou l'autre peut s'effectuer selon plusieurs méthodes, décrites par la suite.

Dans une troisième étape principale S23, dite de sélection automatique, la première clé commune HK1 ou la deuxième clé commune HK2 est choisie comme clé commune HK selon que cette localisation correspond à la première installation ou à la deuxième installation. Il en est de même pour le choix entre un premier ensemble des identifiants TAB1 ou un deuxième ensemble des identifiants TAB2.

Ainsi, dans une quatrième étape principale S24, un ordre de commande et émis par l'unité mobile de commande, cet ordre comprenant à la fois la bonne clé commune et l'identifiant correspondant à l'équipement désigné par l'action sur l'interface de commande.

Par la suite, dans une cinquième étape principale S25, il y a désactivation automatique des deuxième et troisième étapes principales, celles-ci étant devenues inutiles tant qu'il n'y a pas changement d'installation. Ainsi, l'unité mobile de commande se comporte par la suite comme si elle était affectée uniquement à la deuxième installation, ce qui évite toute perte de temps, tout trafic radio inutile et toute consommation inutile dans l'exécution des prochaines commandes.

Alternativement, seule la troisième étape principale est désactivée, et ne sera réactivée que si l'étape de localisation montre que la localisation correspond à un changement d'installation.

La figure 4 représente un deuxième mode d'exécution du procédé de fonctionnement se distinguant du premier mode d'exécution en ce qu'il comprend en plus une étape complémentaire ou sixième étape principale S26, dans laquelle il y a automatiquement réactivation de la deuxième étape principale et de la troisième étape principale, dans le cas où l'émission d'une commande ne donne lieu à aucune réponse. L'absence de réponse peut en effet résulter du fait que l'utilisateur a quitté sa résidence secondaire et se trouve à nouveau devant sa résidence principale dont aucun équipement ne répond à un message émis avec la deuxième clé commune HK2. Il y a donc lieu de rétablir une étape de détermination automatique de la localisation de l'unité mobile de commande.

La figure 5 représente un troisième mode d'exécution du procédé de fonctionnement se distinguant du premier mode d'exécution en ce que la troisième étape principale comprend une sous-étape S231. Cette sous-étape comprend un téléchargement de la table de l'ensemble des identifiants de l'installation qui vient d'être déterminée et qui peuvent être commandés à partir de l'unité mobile de commande. Ainsi, la capacité mémoire de l'unité mobile de commande affectée à l'enregistrement d'un ensemble d'identifiants peut être réduite, et limitée au nombre maximum d'identifiants contenus dans une installation et/ou susceptibles d'être commandés par l'unité mobile de commande. Par exemple, une télécommande à 4 boutons peut disposer d'un espace mémoire limité à 4 identifiants (si on exclut des identifiants obtenus par combinaison d'appuis de différents boutons).

Le téléchargement peut se faire à partir de données stockées dans un serveur distant, ou stockées dans un des équipements de l'installation, préférentiellement un équipement fixe, par exemple le boîtier de commande 18 de la première installation et la passerelle 28 de la deuxième installation.

Si les données sont stockées dans un serveur distant, elles peuvent être transmises via le réseau de communication GSM ou via le réseau partagé. Ces données d'identification des équipements ne nécessitent pas le même degré de sécurité que les clés communes.

La figure 6 représente un premier mode de réalisation de la deuxième étape principale S22 du premier mode d'exécution du procédé de fonctionnement, sous forme d'une étape unique S221, applicable lorsque l'unité mobile de commande comprend une ressource de géolocalisation, par exemple dans le cas d'un téléphone. Dans cette étape unique, le contour est défini par géolocalisation. Autrement dit, la position de l'unité mobile de commande est déterminée à l'aide du moyen de localisation, par exemple par utilisation de signaux de localisation issus de satellites comme des signaux GPS, et cette position est comparée à un contour préenregistré dans une mémoire cartographique. La détermination de position peut avoir lieu dans ce cas d'une manière indépendante de toute autre action, c'est-à-dire que la deuxième étape principale et la troisième étape principale peuvent alors précéder la première étape principale.

L'étape de localisation a lieu préférentiellement dans l'unité mobile de commande, celle-ci comprenant une première mémoire cartographique 50 dans laquelle ont été stockées (lors d'une étape de configuration préalable) des coordonnées de position de chaque installation, d'où se déduit le contour relatif à chaque installation.

Par exemple, le contour d'une installation est défini à parti des coordonnées géographiques des deux équipements les plus distants de l'installation et correspond au quadrilatère défini par l'intersection des droites :

$$x = XMIN - 20,\ x = XMAX + 20$$

avec les droites :

$$y = YMIN - 20,\ y = YMAX + 20$$

XMIN, XMAX, YMIN et YMAX représentant les extrêmes des valeurs de coordonnées géographiques enregistrées dans la mémoire cartographique pour ces équipements distants et une valeur de 20 mètres étant choisie comme marge pour délimiter le contour.

Alternativement, cette étape de localisation peut être exécutée en partie dans le serveur distant, celui-ci pouvant également contenir une deuxième mémoire cartographique 51, contenant les données de géolocalisation des contours de chaque installation.

Dans ce cas, la deuxième étape S22 peut comprendre l'envoi par l'unité mobile de commande de l'information de position au serveur distant, en utilisant le réseau de communication GSM, et à recevoir le résultat depuis le serveur distant, par exemple sous forme d'un des trois résultats :

    R1 : Localisation = Installation_1
    R2 : Localisation = Installation_2
    R3 : Localisation = Hors Installations

La figure 7 représente un deuxième mode de réalisation de la deuxième étape principale S22 du premier mode d'exécution du procédé de fonctionnement. Dans ce cas, l'étape de localisation a lieu sous forme d'une étape de détermination S222 basée sur la réponse des équipements du réseau domotique à un ordre de commande comprenant soit la première clé commune, soit la deuxième clé commune. Dans un premier temps, la clé commune en cours, ou clé commune initiale, est utilisée. Si aucune réponse n'est captée par l'unité mobile de commande, alors elle en déduit qu'il faut utiliser l'autre clé commune pour répéter le même ordre. Si une réponse est alors obtenue, on prend désormais cette autre clé commune comme nouvelle clé commune en remplacement de la clé commune initiale. Sinon, cela signifie qu'on est hors de portée radio de chacune des deux installations et on conserve la clé commune initiale, car il est plus probable que l'utilisateur retourne par la suite vers la dernière résidence utilisée plutôt qu'il change de résidence. Alternativement, la mémoire de clé commune HK peut être vidée.

Par exemple, l'unité mobile de commande est une télécommande de type porte-clés comprenant 4 touches de commande. Chaque touche de commande est dédiée à un équipement, pour le commander selon un cycle à deux temps (marche - arrêt) ou selon un cycle à 4 temps (sens 1 - arrêt - sens 2 - arrêt) selon le type d'équipement. Une des touches de commande est affectée à la porte de garage (référence 11) dans la première installation et est affectée au portail (référence 21) dans la deuxième installation.

On suppose que l'actionneur de porte de garage est défini par l'identifiant ID(11) dans la première table des identifiants TAB1, et que l'actionneur de portail est défini par l'identifiant ID(21) dans la deuxième table des identifiants TAB2. L'unité mobile de commande est utilisée une dernière fois pour fermer la porte de garage de la première installation, au moment où l'utilisateur quitte sa résidence principale. Quand il arrive à proximité de sa résidence secondaire, il active la même touche de commande pour envoyer un ordre d'ouverture du portail.

Cependant, le message émis par l'unité mobile de commande comprend le code de la première clé commune HK1 et l'identifiant ID(11). Cet ordre ne reçoit donc aucune réponse. De ce fait, le message est ré-émis, mais contient cette fois le code de la deuxième clé commune HK2 et l'identifiant ID(21).

Cet ordre provoque donc un accusé de réception, puis est exécuté. La réception d'un accusé de réception suffit à indiquer à l'unité mobile de commande quelle est sa nouvelle localisation, et termine ainsi l'étape de localisation.

Le procédé passe alors à la troisième étape principale S23, et la deuxième clé commune HK2 devient la nouvelle clé commune pour tous les ordres qui suivront, au moins tant que ces ordres donneront naissance à réponse de la part des équipements.

Ce deuxième mode de réalisation peut aussi bien se prêter à un plus grand nombre de clés communes. Il faut noter que l'envoi de messages successifs par l'unité de commande jusqu'à obtenir un accusé de réception peut être complètement masqué pour l'utilisateur puisque ces échanges peuvent se produire en quelques dixièmes de seconde, voire moins, c'est-à-dire par exemple pendant qu'il appuie sur la touche de commande.

Afin de sécuriser la procédure de basculement de clé commune, l'étape de détermination S222 peut être scindée en deux sous-étapes, également représentées en figure 7, pour s'assurer de la localisation de l'unité mobile de commande. Dans une première sous-étape S222a, une demande de réponse est diffusée, sans indication d'identifiant d'équipement domotique destinataire, en utilisant la clé commune initiale. Tous les équipements utilisant cette clé commune, qui captent cette demande, répondent par un accusé de réception, émis à puissance réduite. Si cette réponse est captée par l'unité mobile de commande, la clé commune est alors conservée. Sinon, l'autre clé commune est utilisée pour itérer les mêmes sous-étapes, et c'est elle qui sera conservée si au moins une réponse est obtenue d'un équipement.

Alternativement, et plus simplement, le message de diffusion est émis à puissance réduite lors de la première sous-étape S222a et le message de réponse est émis à puissance normale lors de la deuxième sous-étape S222b.

La figure 8 représente un contour C1 utilisé dans ce deuxième mode de réalisation, en supposant que la portée, qui est par exemple de 300 mètres en champ libre, se réduit à 10 mètres quand une des transmissions a lieu à puissance réduite.

Ainsi, l'unité mobile de commande cesse d'être à portée d'un au moins des équipements dès qu'on quitte le premier contour C1, formé par l'enveloppe de cercles de rayon 10 mètres centrés sur chacun des équipements. Par exemple le cercle CA est centré sur l'équipement référencé 17 et le cercle CB est centré sur l'équipement référencé 18.

Chaque cercle correspond au lieu des points limites de communication entre l'équipement et l'unité mobile de commande. Quand un équipement présente un caractère directif, le cercle est remplacé par un diagramme de rayonnement de type sensiblement elliptique comme représenté en trait pointillé sous la référence CC pour un diagramme de rayonnement de l'équipement de référence 11.

La valeur de portée est choisie suffisante pour qu'il y ait chevauchement des cercles ou diagrammes de rayonnement et pour obtenir un seul contour contenant l'ensemble des équipements de l'installation.

Si l'unité de communication domotique de l'unité mobile de commande ne reçoit aucune réponse au message diffusé lors de la première sous-étape S322, alors l'unité mobile de commande RCU est hors du premier contour C1, et on active la deuxième étape principale du procédé avec une autre clé commune pour déterminer si l'unité mobile de commande se trouve dans un autre contour.

L'intérêt de définir un contour relativement restreint en dimensions est de permettre d'appliquer le procédé de commande à des installations proches les une des autres, par exemple à plusieurs installations similaires d'un lotissement ou condominium.

Par exemple, à la demande du propriétaire d'une première maison et sous son contrôle, une unité mobile de commande d'une installation domotique d'une maison voisine peut recevoir, comme il a été indiqué plus haut, à la fois la clé commune de la première maison et les identifiants de certains équipements, notamment de type accès, que le propriétaire souhaite mettre à disposition de la maison voisine, par exemple en son absence pour profiter de certaines installations (piscine) ou pour permettre la livraison de biens.

La personne qui dispose de cette télécommande de maison voisine n'est nullement gênée par ce transfert de droits nouveaux puisque le fonctionnement de sa télécommande reste strictement identique dans sa maison voisine. Par contre, au moment où cette télécommande est utilisée pour accéder à la première maison, elle prend automatiquement la configuration apte à commander les équipements autorisés de la première maison.

Il en résulte une grande facilité d'utilisation, une réduction des coûts puisqu'il est inutile de faire l'acquisition d'une télécommande supplémentaire, une diminution des risques de perte ou vol du moyen d'accès, car les droits sont transférés à un objet nomade auquel la personne qui en dispose tient particulièrement puisqu'il s'agit de la télécommande d'accès à sa propre maison, la maison voisine.

Le droit d'utilisation de la clé commune de la première maison est préférentiellement conditionné par une période déterminée ou par un évènement particulier.

Dans un autre exemple d'application, les droits d'accès à une chambre d'hôtel sont transférés à l'unité mobile de commande, de manière sécurisée et pour une période déterminée, sous forme de transfert de la clé commune relative à cette chambre d'hôtel et sous forme de table d'identifiants des équipements de la chambre d'hôtel. Toutes les préférences du propriétaire de l'unité mobile de commande peuvent avoir été enregistrées, ou être communiquées par un serveur distant, de manière à l'accueillir avec son environnement habituel.

Alternativement ou de manière complémentaire à ce qui vient d'être décrit, un signal indicateur de la puissance d'émission (en anglais : « Received Signal Strength Indicator - RSSI) peut être utilisé dans les étapes de localisation et/ou de sélection d'une des clés communes, notamment pour faire face au cas où deux installations sont suffisamment voisines pour qu'il y ait recouvrement des portées, y compris quand l'émission est réalisée à puissance réduite. Dans ce cas, une variante des deuxième et troisième étapes principales consiste à diffuser un premier message d'interrogation avec la première clé commune et à enregistrer une première valeur correspondant plus fort niveau RSSI des réponses, puis à itérer la même opération avec la deuxième clé commune et à enregistrer de même une deuxième valeur. La sélection de la clé commune est réalisée en prenant celle ayant donné la plus forte valeur. Alternativement, la première valeur et la deuxième valeur correspondent à une valeur moyenne des nivaux RSSI reçus dans chaque cas.

Sauf incompatibilité technique ou logique, les différents modes d'exécution du procédé de fonctionnement peuvent être combinés entre eux. De même, sauf incompatibilité technique ou logique, les différents modes de réalisation des étapes peuvent être appliqués aux différents modes d'exécution et aux différentes combinaisons des modes d'exécution.

## Revendications

1. Procédé de fonctionnement d'une unité mobile de commande (40) destinée à faire successivement et alternativement partie:

   - d'une première installation domotique (100) comprenant des équipements (11, 12, 13, 14, 15, 16, 17, 18) communiquant sur un premier réseau domotique (19), chaque élément de la première installation étant muni d'un identifiant et partageant une même première clé commune propre au premier réseau domotique et authentifiant l'appartenance d'un équipement au premier réseau domotique, et
   - d'une deuxième installation domotique (200) comprenant des équipements (21, 22, 23, 24, 25, 26, 27, 28) communiquant sur un deuxième réseau domotique (29), chaque élément de la deuxième installation étant muni d'un identifiant et partageant une même deuxième clé commune propre au deuxième réseau domotique et authentifiant l'appartenance d'un équipement au deuxième réseau domotique,
   l'unité mobile de commande comprenant une mémoire (47b) contenant plusieurs clés communes dont les première et deuxième clés communes, le procédé comprenant:

- une étape de localisation de l'unité mobile de commande relativement à la première installation domotique et/ou relativement à la deuxième installation domotique,
- une étape de sélection automatique d'une clé commune dans l'unité mobile de commande, selon le résultat de l'étape de localisation.

2. Procédé de fonctionnement selon la revendication 1, **caractérisé en ce qu'**au moins un des équipements de la première installation est un équipement motorisé de fermeture et/ou au moins un des équipements de la deuxième installation est un équipement motorisé de fermeture.

3. Procédé de fonctionnement selon la revendication 1 ou 2, **caractérisé en ce que** l'étape de localisation comprend la comparaison de données de géolocalisation de l'unité mobile de commande avec un contour enregistré dans une mémoire cartographique (50).

4. Procédé de fonctionnement selon la revendication 1 ou 2, **caractérisé en ce que** l'étape de localisation comprend la réception par l'unité mobile de commande d'une réponse d'au moins un des équipements domotiques à un message envoyé par l'unité mobile de commande.

5. Procédé de fonctionnement selon la revendication 4, **caractérisé en ce qu'**il comprend une étape d'émission d'un premier message, comprenant une demande de réponse, par l'unité mobile de commande et une étape d'émission d'un deuxième message par chaque équipement ayant reçu le premier message.

6. Procédé de fonctionnement selon la revendication 5, **caractérisé en ce qu'**une des étapes d'émission est réalisée à puissance réduite.

7. Procédé de fonctionnement selon la revendication 4, **caractérisé en ce qu'**il comprend une étape d'émission d'un troisième message comprenant un ordre de commande et la première clé commune et une étape d'émission d'un quatrième message comprenant le même ordre de commande avec la deuxième clé commune quand le troisième message n'a donné lieu à aucune réponse captée par l'unité mobile de commande.

8. Procédé de fonctionnement selon l'une des revendications précédentes, **caractérisé en ce que** l'étape de localisation et/ou l'étape de sélection automatique est désactivée dès lors qu'une clé commune a été sélectionnée.

9. Procédé de fonctionnement selon la revendication 8, **caractérisé en ce que** l'étape de localisation et/ou l'étape de sélection automatique est réactivée dès lors qu'un ordre émis ne donne pas lieu à réponse d'un équipement domotique.

10. Procédé de fonctionnement selon l'une des revendications précédentes, **caractérisé en ce qu'**il comprend une étape de transmission sécurisée des première et deuxième clés communes et d'enregistrement de ces clés communes dans l'unité mobile de commande.

11. Procédé de fonctionnement selon l'une des revendications précédentes, **caractérisé en ce qu'**il comprend une étape de téléchargement dans l'unité mobile de commande d'une table des identifiants d'équipements domotiques aptes à être commandés par l'unité mobile de commande.

12. Procédé de fonctionnement selon l'une des revendications 10 ou 11, **caractérisé en ce que** l'étape de transmission sécurisée ou l'étape de téléchargement est effectuée à partir de données situées dans un serveur distant (31).

13. Procédé de fonctionnement selon l'une des revendications précédentes, **caractérisé en ce que** l'étape de localisation de l'unité mobile de commande comprend la localisation de l'unité mobile de commande relativement à une première zone géographique contenant les éléments de la première installation domotique et/ou la localisation de l'unité mobile de commande relativement à une deuxième zone géographique contenant les éléments de la deuxième installation domotique.

14. Unité mobile de commande (40) comprenant des moyens matériels (41, 42, 43, 44, 46, 50, 45, 48, 49, 47a, 47b) et/ou logiciels de mise en oeuvre du procédé de fonctionnement selon l'une des revendications 1 à 13.

15. Installation (100 ; 200) comprenant une unité mobile de commande selon la revendication précédente.

**Patentansprüche**

1. Verfahren für den Betrieb einer mobilen Steuereinheit (40), die dazu bestimmt ist, nacheinander und abwechselnd Teil von Folgendem zu sein:

   - einer ersten Domotikanlage (100), die Einrichtungen (11, 12, 13, 14, 15, 16, 17, 18) aufweist, die auf einem ersten Domotiknetz (19) kommunizieren, wobei jedes Element der ersten Anlage mit einer Kennung versehen ist und einen selben gemeinsamen ersten Schlüssel teilt, der dem ersten Domotiknetz eigen ist und die Zugehörigkeit einer Einrichtung zum ersten Domotiknetz authentifiziert, und
- einer zweiten Domotikanlage (200), die Einrichtungen (21, 22, 23, 24, 25, 26, 27, 28) aufweist, die auf einem zweiten Domotiknetz (29) kommunizieren, wobei jedes Element der zweiten Anlage mit einer Kennung versehen ist und einen selben gemeinsamen zweiten Schlüssel teilt, der dem zweiten Domotiknetz eigen ist und die Zugehörigkeit einer Einrichtung zum zweiten Domotiknetz authentifiziert,
wobei die mobile Steuereinheit einen Speicher (47b) aufweist, der mehrere gemeinsame Schlüssel, darunter den ersten und den zweiten gemeinsamen Schlüssel, enthält, wobei das Verfahren Folgendes aufweist:
- einen Schritt zur Ortsbestimmung der mobilen Steuereinheit in Bezug zur ersten Domotikanlage und/oder in Bezug zur zweiten Domotikanlage,
- einen Schritt zur automatischen Auswahl eines gemeinsamen Schlüssels in der mobilen Steuereinheit gemäß dem Ergebnis des Schritts zur Ortsbestimmung.

2. Betriebsverfahren nach Anspruch 1, **dadurch gekennzeichnet, dass** mindestens eine der Einrichtungen der ersten Anlage eine motorisierte Schließeinrichtung ist und/oder mindestens eine der Einrichtungen der zweiten Anlage eine motorisierte Schließeinrichtung ist.

3. Betriebsverfahren nach Anspruch 1 oder 2, **dadurch gekennzeichnet, dass** der Schritt zur Ortsbestimmung den Vergleich von Geolokalisierungsdaten der mobilen Steuereinheit mit einem in einem kartographischen Speicher (50) gespeicherten Umriss aufweist.

4. Betriebsverfahren nach Anspruch 1 oder 2, **dadurch gekennzeichnet, dass** der Schritt zur Ortsbestimmung den Empfang einer Antwort von mindestens einer der Domotikeinrichtungen auf eine durch die mobile Steuereinheit gesendete Nachricht durch die mobile Steuereinheit aufweist.

5. Betriebsverfahren nach Anspruch 4, **dadurch gekennzeichnet, dass** es einen Schritt zum Senden einer ersten Nachricht, die eine Antwortanforderung aufweist, durch die mobile Steuereinheit und einen Schritt zum Senden einer zweiten Nachricht durch jede Einrichtung, die die erste Nachricht empfangen hat, aufweist.

6. Betriebsverfahren nach Anspruch 5, **dadurch gekennzeichnet, dass** einer der Sendeschritte bei verringerter Leistung ausgeführt wird.

7. Betriebsverfahren nach Anspruch 4, **dadurch gekennzeichnet, dass** es einen Schritt zum Senden einer dritten Nachricht, die einen Steuerbefehl und den ersten gemeinsamen Schlüssel aufweist, und einen Schritt zum Senden einer vierten Nachricht aufweist, die denselben Steuerbefehl mit dem zweiten gemeinsamen Schlüssel aufweist, wenn die dritte Nachricht keine durch die mobile Steuereinheit empfangene Antwort verursacht hat.

8. Betriebsverfahren nach einem der vorhergehenden Ansprüche, **dadurch gekennzeichnet, dass** der Schritt zur Ortsbestimmung und/oder der Schritt zur automatischen Auswahl ab dem Zeitpunkt der Auswahl eines gemeinsamen Schlüssels deaktiviert wird.

9. Betriebsverfahren nach Anspruch 8, **dadurch gekennzeichnet, dass** der Schritt zur Ortsbestimmung und/oder der Schritt zur automatischen Auswahl ab dem Zeitpunkt, an dem ein gesendeter Befehl keine Antwort einer Domotikeinrichtung verursacht, reaktiviert wird.

10. Betriebsverfahren nach einem der vorhergehenden Ansprüche, **dadurch gekennzeichnet, dass** es einen Schritt zur gesicherten Übertragung des ersten und zweiten gemeinsamen Schlüssels und zum Speichern dieser gemeinsamen Schlüssel in der mobilen Steuereinheit aufweist.

11. Betriebsverfahren nach einem der vorhergehenden Ansprüche, **dadurch gekennzeichnet, dass** es einen Schritt zum Herunterladen einer Tabelle der Kennungen von Domotikeinrichtungen, die in der Lage sind, durch die mobile Steuereinheit gesteuert zu werden, in die mobile Steuereinheit aufweist.

12. Betriebsverfahren nach einem der Ansprüche 10 oder 11, **dadurch gekennzeichnet, dass** der Schritt zur gesicherten Übertragung oder der Schritt zum Herunterladen ausgehend von Daten durchgeführt wird, die sich in einem entfernten Server (31) befinden.

13. Betriebsverfahren nach einem der vorhergehenden Ansprüche, **dadurch gekennzeichnet, dass** der Schritt zur Ortsbestimmung der mobilen Steuereinheit die Ortsbestimmung der mobilen Steuereinheit in Bezug zu einer ersten geographischen Zone, die die Elemente der ersten Domotikanlage enthält, und/oder die Ortsbestimmung der mobilen Steuereinheit in Bezug zu einer zweiten geographischen Zone aufweist, die die Elemente der zweiten Domotikanlage enthält.

**14.** Mobile Steuereinheit (40), die Hardware- (41, 42, 43, 44, 46, 50, 45, 48, 49, 47a, 47b) und/oder Software-Mittel zur Ausführung des Betriebsverfahrens nach einem der Ansprüche 1 bis 13 aufweist.

**15.** Anlage (100; 200), die eine mobile Steuereinheit nach dem vorhergehenden Anspruch aufweist.

**Claims**

**1.** A method of operating a mobile control unit (40) intended to form successively and alternatively part:

    - of a first home-automation installation (100) comprising appliances (11, 12, 13, 14, 15, 16, 17, 18) communicating on a first home-automation network (19), each element of the first installation being provided with an identifier and sharing one and the same first common key specific to the first home-automation network and authenticating an appliance's membership of the first home-automation network, and

    - of a second home-automation installation (200) comprising appliances (21, 22, 23, 24, 25, 26, 27, 28) communicating on a second home-automation network (29), each element of the second installation being provided with an identifier and sharing one and the same second common key specific to the second home-automation network and authenticating an appliance's membership of the second home-automation network, and

    the mobile control unit comprising a memory (47b) containing several common keys, which include the first and second common keys, the method comprising:

    - a step of locating the mobile control unit in relation to the first home-automation installation and/or in relation to the second home-automation installation,

    - a step of automatically selecting a common key in the mobile control unit, according to the result of the locating step.

**2.** The operating method as claimed in claim 1, **characterized in that** at least one of the appliances of the first installation is a motorized closure appliance and/or at least one of the appliances of the second installation is a motorized closure appliance.

**3.** The operating method as claimed in claim 1 or 2, **characterized in that** the locating step comprises the comparing of geolocation data for the mobile control unit with a contour recorded in a cartographic memory (50).

**4.** The operating method as claimed in claim 1 or 2, **characterized in that** the locating step comprises the reception by the mobile control unit of a response of at least one of the home-automation appliances to a message dispatched by the mobile control unit.

**5.** The operating method as claimed in claim 4, **characterized in that** it comprises a step of transmitting a first message, comprising a response request, by the mobile control unit and a step of transmitting a second message by each appliance that received the first message.

**6.** The operating method as claimed in claim 5, **characterized in that** one of the transmission steps is carried out at reduced power.

**7.** The operating method as claimed in claim 4, **characterized in that** it comprises a step of transmitting a third message comprising a control command and the first common key and a step of transmitting a fourth message comprising the same control command with the second common key when the third message has not given rise to any response picked up by the mobile control unit.

**8.** The operating method as claimed in one of the preceding claims, **characterized in that** the locating step and/or the automatic selection step is deactivated provided that a common key has been selected.

**9.** The operating method as claimed in claim 8, **characterized in that** the locating step and/or the automatic selection step is reactivated provided that a transmitted order does not give rise to a response of a home-automation appliance.

**10.** The operating method as claimed in one of the preceding claims, **characterized in that** it comprises a step of securely transmitting the first and second common keys and of recording these common keys in the mobile control unit.

**11.** The operating method as claimed in one of the preceding claims, **characterized in that** it comprises a step of downloading into the mobile control unit a table of the identifiers of home-automation appliances which are able to be controlled by the mobile control unit.

**12.** The operating method as claimed in one of claims 10 or 11, **characterized in that** the secure transmission step or the downloading step is performed on the basis of data situated in a remote server (31).

**13.** The operating method as claimed in one of the preceding claims, **characterized in that** the step of locating the mobile control unit comprises the locating of the mobile control unit in relation to a first geographical zone containing the elements of the first home-automation installation and/or the locating of the mobile control unit in relation to a second geographical zone containing the elements of the second home-automation installation.

14. A mobile control unit (40) comprising hardware (41, 42, 43, 44, 46, 50, 45, 48, 49, 47a, 47b) and/or software means for implementing the operating method as claimed in one of claims 1 to 13.

15. An installation (100; 200) comprising a mobile control unit as claimed in the preceding claim.

Fig. 1

**Fig. 2**

Disposer l'unité mobile de commande RCU dans un premier bâtiment comprenant un réseau domotique de clé commune HK1 — S11

Transmettre la clé commune HK à l'unité mobile de commande l'unité mobile de commande RCU par un processus sécurisé et enregistrer HK1 dans l'unité mobile de commande RCU — S12

Itérer dans un deuxième Bâtiment et enregistrer une deuxième clé commune HK2 — S13

**Fig. 3**

Agir sur l'interface de commande MMI pour émettre un ordre de commande — S21

Déterminer automatiquement si l'unité mobile de commande est dans Contour 1 ou dans Contour 2 — S22

Si Contour 1 alors HK = HK1, TAB = TAB1
Si Contour 2 alors HK = HK2, TAB = TAB2 — S23

Emettre l'ordre de commande avec le contenu sélectionné de HK et de TAB — S24

Désactiver les étapes S22 et S23 — S25

**Fig. 4**

Réactiver les étapes S22 et S23 quand un ordre émis ne donne pas lieu à une réponse d'un équipement — S26

**Fig. 5**

Télécharger dans l'unité mobile de commande la Table TAB des équipements selon la position de l'unité mobile de commande RCU, à partir d'un serveur SRV (et/ou d'un équipement) — S231

**Fig. 6**

Définir le contour par géolocalisation — S221

## Fig. 7

Définir le contour par une réponse des équipements du réseau domotique _⌐ S222

Diffuser, avec puissance d'émission normale, une demande de réponse des équipements _⌐ S222a

Répondre avec puissance d'émission réduite _⌐ S222b

## Fig. 8

## Fig. 9

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 03088486 A
- US 7724687 B
- WO 03081352 A
- US 7683754 B
- EP 1967923 A
- EP 1482718 A
- EP 0913979 A
- US 20020031228 A
- WO 0057375 A
- FR 2924890
- US 7289014 B
- WO 0171685 A
- US 6563430 B
- FR 2898719
- US 7363028 B
- US 7110761 B